# EUROPEAN PATENT APPLICATION

(11) **EP 4 596 113 A1**
(43) Date of publication of application: **06.08.2025**
(21) Application number: 24843364.1
(22) Date of filing: 01.07.2024
(51) Int. Cl.: B05C 5/02, H01M 4/04, B05C 11/10

(54) **SLOT DIE COATER AND METHOD FOR MANUFACTURING ELECTRODE PLATE OF SECONDARY BATTERY BY USING SAME**

(30) Priority: 18.07.2023 KR 20230093003
(71) Applicant: LG Energy Solution, Ltd., Seoul 07335 (KR)
(72) Inventor: BAE, Min-Woo, Daejeon 34122 (KR)
(74) Representative: Goddar, Heinz J.
(86) International application number: PCT/KR2024/009228
(87) International publication number: WO 2025/018644

(57) **Abstract**

Disclosed is a slot die coater for improving profiles of edges of an electrode active material layer.

A slot die coater according to the present disclosure includes: an upper die block, a middle die block, and a lower die block; an upper shim provided between the upper die block and the middle die block to form an upper slot; and a lower shim provided between the middle die block and the lower die block to form a lower slot, wherein a first coating liquid is discharged through an upper outlet communicating with the upper slot and applied onto a base material, and a second coating liquid is discharged through a lower outlet communicating with the lower slot and applied onto the base material, wherein the upper shim includes at least one first opening, wherein the lower shim includes a second opening at a position corresponding to the first opening, and wherein the second opening includes a section having a smaller width than the first opening at a front end adjacent to the lower outlet.

## Description

### TECHNICAL FIELD

The present disclosure relates to an apparatus and a method for manufacturing an electrode plate for secondary batteries, and more specifically, it relates to a slot die coater capable of being used to coat an electrode active material slurry on a collector, and a method for manufacturing an electrode plate for secondary batteries using the slot die coater. In particular, the present disclosure relates to a dual slot die coater capable of simultaneously form two or more layers in a wet manner, and a method for manufacturing an electrode plate for a secondary battery using the same. The present application claims priority to Korean Patent Application No. 10-2023-0093003 filed on July 18, 2023 in the Republic of Korea, the disclosures of which are incorporated herein by reference.

### BACKGROUND ART

As technology of mobile devices is developed and as the demand for mobile devices increases, the demand for secondary batteries as an energy source is rapidly increasing, and these secondary batteries inevitably include an electrode assembly, which is a power generation element. The electrode assembly is configured such that a positive electrode, a separator, and a negative electrode are laminated at least once, and the positive electrode and negative electrode are manufactured by coating and drying a positive electrode active material slurry and a negative electrode active material slurry on collectors made of aluminum foil and copper foil, respectively. In order to make the charge/discharge features of the secondary battery uniform, the positive electrode active material slurry and negative electrode active material slurry must be evenly coated on the collectors, and a slot die coater has conventionally been used therefor.

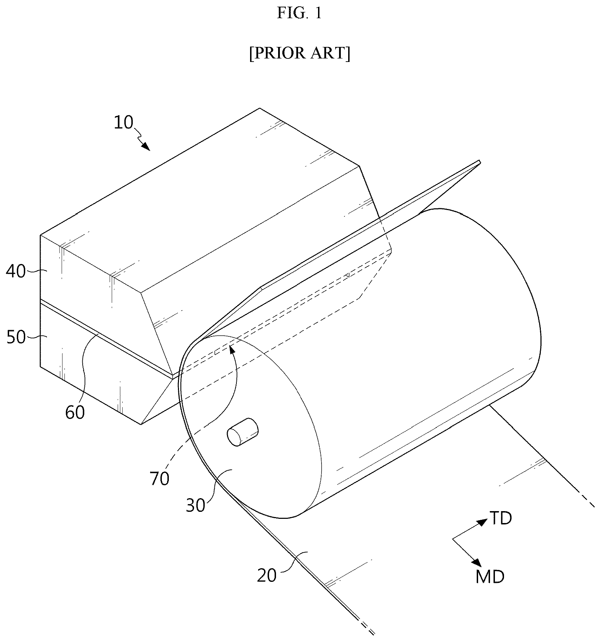

FIG. 1 is a schematic diagram illustrating an example of using a slot die coater according to the prior art.

Referring to FIG. 1, typically, an electrode active material slurry is coated onto a collector 20 using a slot die coater 10, thereby manufacturing an electrode plate. In this method, the electrode active material slurry discharged from the slot die coater 10 is applied onto the collector 20 that is transported in the MD direction by the coating roll 30. The electrode active material slurry discharged from the slot die coater 10 is widely applied to one surface of the collector 20 to form an electrode active material layer. The slot die coater 10 includes two die blocks 40 and 50 and has a slot formed by interposing a shim 60 between the two die blocks 40 and 50, so that the electrode active material slurry may be discharged through an outlet 70 connected to the slot to form an electrode active material layer.

The TD-directional coating width of the electrode active material layer coated on the collector 20 is determined by the width of the slot. If the coating width is required to be changed, the shim 60 for determining the width of the slot may vary, thereby implementing various coating widths. In particular, in order to secure the safety of the electrode plate, the electrode active material slurry must be applied to be evenly distributed on the collector 20.

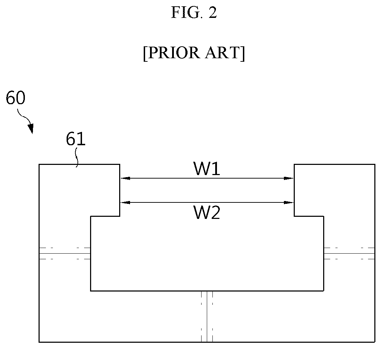

FIG. 2 is a plan view of a shim according to the prior art.

In a shim 60 shown in FIG. 2, the spacing between the shim fingers 61 is constant (W1=W2) regardless of the front or rear of the shim 60, and the spacing between the shim fingers 61 determines the coating width. With this shim 60, an electrode active material layer may be formed on the collector 20 along one lane formed between two shim fingers 61. However, since the electrode active material slurry is a fluid, it has the property of flowing down after coating, which is called sliding.

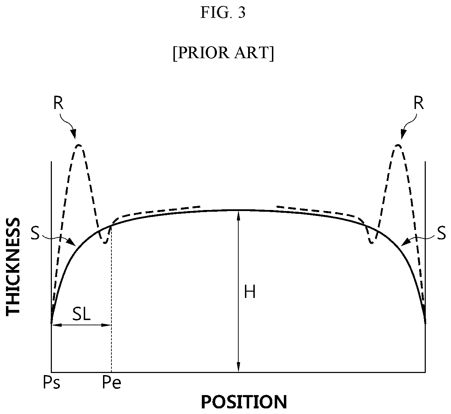

FIG. 3 shows a cross-section of a secondary battery electrode plate, in which the electrode active material slurry is coated on one surface of the collector, in the TD direction and illustrates a state in which sliding has occurred.

Referring to FIG. 3, a portion of the electrode active material slurry flows down from the edges of the electrode active material layer, resulting in a sliding phenomenon in which the thickness of the electrode active material layer is gradually reduced toward the sides. Reference numeral S indicates a portion where sliding occurs, i.e., a sliding portion.

Such sliding may frequently occur at both ends of the maintenance portion in the width direction (TD direction) on which the electrode active material slurry is coated, causing loading unevenness. In addition, sliding causes unevenness during rolling and further results in the NP ratio, which is the surface ratio of the negative electrode active material layer to the positive electrode active material layer, not satisfying a design requirement.

In particular, although the use of the shim 60 shown in FIG. 2 maintains the same discharge capacity ratio as a design value between the positive and negative electrodes in the flat coating section, a sliding portion S may be formed at the position where the edge of the coating layer of the positive electrode plate and the edge of the coating layer of the negative electrode plate face each other, causing the discharge capacity ratio to be distorted. In addition, if the positive electrode capacity becomes larger than the negative electrode capacity, the risk increases, so the stability in the portion where the positive electrode flat portion and the negative electrode sliding portion S face each other significantly deteriorates. For this reason, it is necessary to control the sliding in the electrode active material slurry coating process, and in particular, when using multiple lanes for stripe pattern coating, it is necessary to manage the shape control of the boundary surface (sliding portion), and in particular, the sliding length must be managed.

As shown in FIG. 3, the general shape of the sliding portion S in the electrode profile shows that the thickness increases as the widthwise distance increases from the point Ps where the coating portion starts, and that the increase rate of thickness gradually decreases beyond a certain widthwise distance so that the thickness converges to a certain value, instead of increasing, to have a flat shape. A sliding length SL may be defined as the widthwise distance from the point Ps where the coating portion starts to the point Pe where the sliding ends. The point Pe where the sliding ends may be the point where flattening begins in the electrode profile. For example, it may be the point where the thickness reaches a target coating layer thickness H or close thereto within a certain range of %.

However, in the method of manufacturing an electrode plate for a secondary battery, in order to utilize both sides of the collector, the so-called sequential coating method is used, in which an electrode active material layer is first coated on the top surface of the collector and then on the back surface. In this case, the top surface tends to have a sliding length SL longer than that of the back surface. Therefore, even if sequential coating is performed with a slot die coater including the same shim, the quality of the electrode on the top surface may deteriorate. In addition, since the sliding in the edge of the top surface may produce a portion where the collector is recessed when the collector is turned over for coating of the back surface, the electrode active material slurry may be concentrated on the edge during the coating of the back surface, thereby causing a particular problem with a side ring phenomenon in which the edge of the back surface protrudes upward after the process is completed. FIG. 3 also shows the electrode profile in a dotted line when the side ring R occurs. In particular, in the case where the flow rate is increased in the side portions in order to manage the sliding length SL through the shape control of the shim 60, the side ring R may occur even if the flow rate is increased significantly in the side portions, so there is limitation as to improvement of the profile of the edge of the electrode active material layer.

### DISCLOSURE

### Technical Problem

The present disclosure has been designed to solve the problems of the related art, and therefore the present disclosure is directed to providing a slot die coater for improving the profile of the edge of an electrode active material layer.

The present disclosure also aims to provide a method for manufacturing an electrode plate for a secondary battery using such a slot die coater.

### Technical Solution

According to one aspect of the present disclosure, there is provided a slot die coater that includes a lower slot and an upper slot, and applies a coating liquid through the lower slot and the upper slot and coats the surface of a base material, which travels continuously, with the same.

A slot die coater according to the present disclosure includes: an upper die block, a middle die block, and a lower die block; an upper shim provided between the upper die block and the middle die block to form an upper slot; and a lower shim provided between the middle die block and the lower die block to form a lower slot, wherein a first coating liquid is discharged through an upper outlet communicating with the upper slot and applied onto a base material, and a second coating liquid is discharged through a lower outlet communicating with the lower slot and applied onto the base material, wherein the upper shim includes at least one first opening, wherein the lower shim includes a second opening at a position corresponding to the first opening, and wherein the second opening includes a section having a smaller width than the first opening at a front end adjacent to the lower outlet.

Preferably, the upper shim includes a first portion configured to serve as a base and at least two second portions extending from the first portion, and the second portions are connected to the same side of the first portion and extend in the same direction, and a space between the second portions is defined as the first opening, and a width of the first opening is constant.

The lower shim may include a third portion configured to serve as a base and at least two fourth portions extending from the third portion, and the fourth portions may be connected to the same side of the third portion and may extend in the same direction, and a space between the fourth portions may be defined as the second opening, and a flow increasing portion having a width greater than a width of the front end of the second opening to increase a flow rate of the second coating liquid may be formed at a rear end of the second opening on an inner side of the lower shim.

In this case, a width of the fourth portion may be differentially configured in a direction toward the rear end to form the flow increasing portion.

A tapered shape may be applied to a side surface of the fourth portion to form the flow increasing portion.

A width of the fourth portion may be constant as a first width from the front end of the second opening to a first position toward the rear end, may decrease to a second width toward the rear end by an inclined surface to a second position, and may be constant as the second width to a third portion.

In addition, an angle of the inclined surface may be 25 degrees to 70 degrees.

In this case, a width of the second portion may be constant as the second width.

A width of the fourth portion may decrease linearly from the front end of the second opening toward the rear end.

As another example, the lower shim may include a third portion configured to serve as a base and at least two fourth portions extending from the third portion, and the fourth portions may be connected to the same side of the third portion and may extend in the same direction, and a space between the fourth portions may be defined as the second opening, and a protrusion may be further formed on a side surface of the fourth portion at the front end of the second opening.

The protrusion may have a right triangle or right trapezoidal shape.

The first coating liquid and the second coating liquid may be different types of coating liquids.

The first coating liquid and the second coating liquid may have viscosities of 4000 cps to 6000 cps.

The middle die block may have a first manifold that receives the first coating liquid and communicates with the upper slot, and the lower die block may have a second manifold that receives the second coating liquid and communicates with the lower slot.

The upper die block may have a first manifold that receives the first coating liquid and communicates with the upper slot, and the lower die block may have a second manifold that receives the second coating liquid and communicates with the lower slot.

The lower slot and the upper slot may form an angle of 30 degrees to 60 degrees.

A method for manufacturing an electrode plate for a secondary battery according to the present disclosure may include: forming a lower coating layer on a base material with a second coating liquid by increasing a flow rate in a side portion; and simultaneously forming an upper coating layer on the lower coating layer with a first coating liquid on the base material to press a portion where the flow rate is increased in the side portion.

Here, the first coating liquid and the second coating liquid may be electrode active material slurries having different types of active materials or binder contents.

The method for manufacturing an electrode plate for a secondary battery described above may be easily performed using a slot die coater according to the present disclosure.

According to another aspect of the present disclosure, a method for manufacturing an electrode plate for a secondary battery includes forming a lower coating layer on a base material with a second coating liquid and simultaneously forming an upper coating layer on the lower coating layer with a first coating liquid on the base material using a slot die coater according to the present disclosure.

The second coating liquid may include a natural graphite active material and the first coating liquid may include an artificial graphite active material.

In addition, a gap between an upper slot of the slot die coater and the base material and a gap between a lower slot of the slot die coater and the base material may be adjusted to control a width at which the first coating liquid spreads more than a width of the first opening and a width at which the second coating liquid spreads more than a width of the second opening.

### Advantageous Effects

Sliding must be managed in electrode active material slurry coating using a slot die coater, and whether sliding occurs may be identified by the thickness unevenness in the width direction in the lane. In order to stably implement the target cell capacity, it is necessary to improve the thickness unevenness by improving the coating loading in the lane.

According to one aspect of the present disclosure, there is provided a slot die coater including a shim capable of improving the loading unevenness in the lane by more stably increasing the loading in a desired area. The lower shim included in the slot die coater of the present disclosure realizes a technology capable of controlling the amount of loading in the width direction during electrode active material slurry coating.

Furthermore, according to the present disclosure, while increasing the flow rate in the side portions in order to manage the sliding length by controlling the shape of the lower shim, the upper shim has a different shape from the lower shim, so the increase in the flow rate in the side portions does not overlap, thereby eliminating the occurrence of side rings.

According to the present disclosure, a slot die coater in which the shape of the lower shim is changed and in which the upper shim has a different shape from that of the lower shim is provided for the purpose of improving the coating unevenness in the lane, so that the flow rate difference of the electrode active material slurry, which is a coating liquid, may be improved, thereby increasing the flow rate of the coating liquid in the side portions of the lane without side rings, and thus the profile of edge of the electrode active material layer may be improved. In particular, the sliding portion profile may be improved.

Using the slot die coater according to the present disclosure, sliding may be improved so that the discharge capacity of the positive electrode does not exceed the discharge capacity of the negative electrode, thereby preventing lithium plating and ensuring cell safety.

According to the present disclosure, loading unevenness due to sliding may be prevented, and the occurrence of side rings may be reduced even in the sequential coating method. That is, according to the present disclosure, in the sequential coating method in which the top surface is coated and then the back surface is coated, the sliding on the top surface is controlled, so that the side ring may be prevented from occurring on the back surface. Therefore, it is excellently effective to manage both the top surface and the back surface.

According to the present disclosure, the coating layer, especially an electrode active material layer, may be uniformly formed with a desired thickness, and since simultaneous coating of two or more electrode active material slurries is possible, there is an excellent effect in both performance and productivity. Using the slot die coater of the present disclosure to manufacture an electrode plate for a secondary battery by applying an electrode active material slurry on the collector, uniform coating is possible even under highspeed or long-width coating conditions.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a schematic diagram illustrating an example of using a slot die coater according to the prior art.
FIG. 2 is a plan view of a shim according to the prior art.
FIG. 3 illustrates a cross-section of a secondary battery electrode plate, in which an electrode active material slurry is coated on one surface of a collector, in the TD direction and illustrates a state in which sliding has occurred.
FIG. 4 is a schematically cross-sectional view of a slot die coater according to an embodiment of the present disclosure.
FIG. 5 is a schematically exploded perspective view of a slot die coater according to an embodiment of the present disclosure.
FIG. 6 is a plan view of an upper shim and a lower shim included in a slot die coater according to an embodiment of the present disclosure.
FIG. 7 is a partially enlarged view of a lower shim included in a slot die coater according to an embodiment of the present disclosure.
FIG. 8 is a partially enlarged view of another lower shim included in a slot die coater according to an embodiment of the present disclosure.
FIG. 9 illustrates a cross-section of a secondary battery electrode plate in a TD direction in the case where an electrode active material slurry is coated using the lower shim in FIG. 7.
FIG. 10 illustrates a cross-section of a secondary battery electrode plate in a TD direction, which is manufactured according to the present disclosure.
FIG. 11 illustrates a cross-section of a secondary battery electrode plate in a TD direction, which is coated with an electrode active material slurry using a slot die coater according to the present disclosure.
FIG. 12 illustrates a cross-section of a secondary battery electrode plate in a TD direction, which is coated with an electrode active material slurry using a slot die coater according to a comparative example.
FIG. 13 illustrates the results of comparing sliding lengths between samples #1 to #4.
FIG. 14 illustrates the results of comparing electrode profiles between samples #1 to #4.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

A slot die coater according to an embodiment of the present disclosure may have two or more slots. Primarily, it is an apparatus that has a lower slot and an upper slot and coats a coating liquid on a base material in a double layer. The "base material" described below is a collector, and the coating liquid is an "electrode active material slurry". A first coating liquid and a second coating liquid are both electrode active material slurries having the same or different compositions (types of active materials, conductive materials, and binders), amounts of contents (active materials, conductive materials, and binders), or properties. The slot die coater according to the embodiment of the present disclosure is optimized for manufacturing an electrode plate for a secondary battery by simultaneously or alternately applying two or more types of electrode active material slurries. However, the scope of the present disclosure is not necessarily limited thereto. For example, the base material may be a porous support constituting a separator, and the first coating liquid and the second coating liquid may be organic substances having different compositions or properties. That is, if a thin film coating is required, anything may be used for the base material, and the first and second coating liquids.

In this specification, "front" refers to the direction in which an outlet is directed (the X-axis direction or the MD direction) and "back" refers to the opposite direction thereof. "Left/right" refers to the direction perpendicular to the direction in which the outlet is directed, and indicates the width direction of the slot (the Z-axis direction or the TD direction).

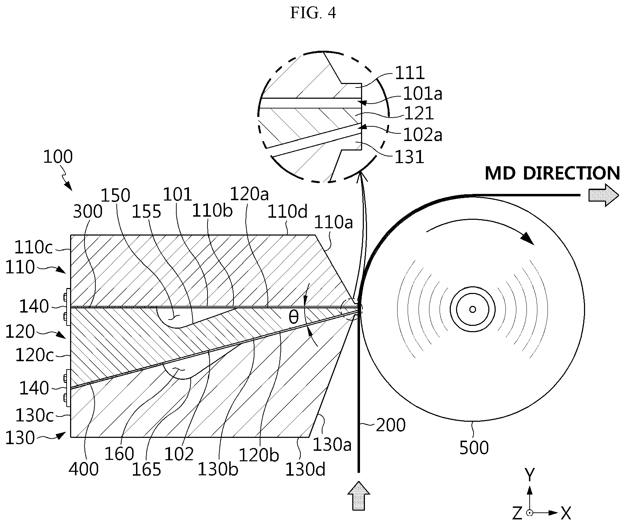

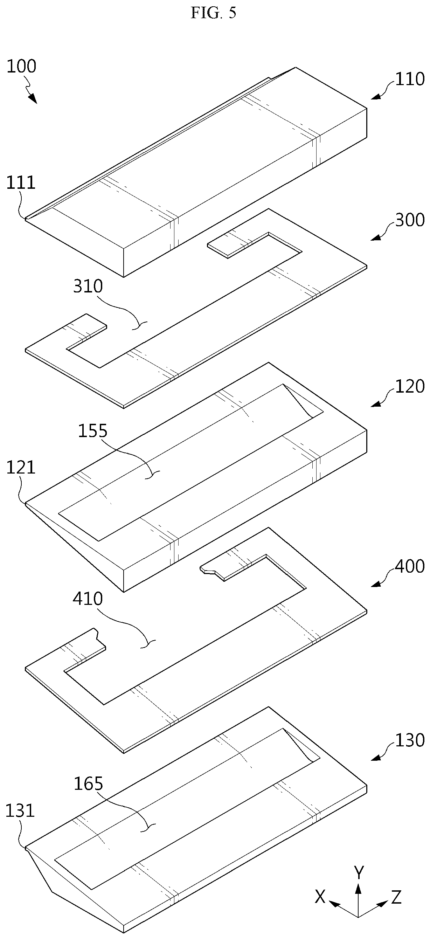

FIG. 4 is a schematically cross-sectional view of a slot die coater according to an embodiment of the present disclosure, and FIG. 5 is a schematically exploded perspective view of a slot die coater according to an embodiment of the present disclosure.

A slot die coater 100 according to an embodiment of the present disclosure is an apparatus that has an upper slot 101 and a lower slot 102, and is able to simultaneously or alternately coat two types of coating liquids, which are the same or different, on a base material 200 through the upper slot 101 and the lower slot 102.

Referring to FIGS. 4 and 5, the slot die coater 100 includes an upper die block 110, a middle die block 120, and a lower die block 130. The upper die block 110 is disposed on the middle die block 120, and the middle die block 120 is disposed on the lower die block 130. The die blocks 110, 120, and 130 may be assembled to each other by bolts, which are fastening members.

In FIG. 4, the slot die coater 100 is installed such that the direction (X-axis direction) in which the electrode active material slurry, which is a coating liquid, is discharged is almost horizontal (about ± 5 degrees).

The middle die block 120 is disposed in the middle of the blocks constituting the slot die coater 100, and is disposed between the upper die block 110 and the lower die block 130 to form a double slot. Although the cross-section of the middle die block 120 included in the slot die coater 100 of the present embodiment is a right triangle, it is not necessarily limited thereto, and for example, the cross-section may be configured in an isosceles triangle.

A first surface 120a of the middle die block 120 facing the upper die block 110 is disposed almost horizontally, and the opposite surface 110d (i.e., the upper outer surface of the slot die coater 100) of a surface 110b of the upper die block 110 facing the first surface 120a is also disposed almost horizontally. As described above, the first surface 120a and the opposite surface 110d are almost parallel. In addition, the opposite surface 130d (i.e., the lower outer surface of the slot die coater 100) of a surface 130b of the lower die block 130 facing the middle die block 120 is also disposed almost horizontally, and this surface becomes the bottom surface 130d (the X-Z plane).

The surfaces of the upper die block 110, middle die block 120, and lower die block 130, i.e., the back surfaces 110c, 120c, and 130c, directed in a direction opposite the direction in which the electrode active material slurry is discharged are disposed almost vertically (the Y-axis direction).

In the upper die block 110 and the lower die block 130, which are the outermost die blocks, the top surface 110d of the upper die block 110 and the bottom surface 130d of the lower die block 130, among the surfaces constituting the outer surfaces of the slot die coater 100, may be configured to be almost perpendicular to the back surfaces 110c and 130c. In addition, the first surface 120a of the middle die block 120 may be configured to be almost perpendicular to the back surface 120c. Since the corners formed by the surfaces are configured at right angles in the die blocks 110, 120, and 130, a right-angle section exists in the cross-section, and since the vertical or horizontal surface may be used as a reference surface, its manufacturing or handling is easy and precision is guaranteed. In addition, the assembly of the upper die block 110, the middle die block 120, and the lower die block 130 has an overall cuboid shape, and only the front portions 110a and 130a from which the coating liquid is discharged are inclined toward the base material 200. The assembly shape of the slot die coater described above is roughly similar to that of the slot die coater (e.g., 10 in FIG. 1) having a single slot, and thus a slot die coater stand or the like may be shared.

The slot die coater 100 may further include two or more fixing portions 140 provided on its back surfaces 110c, 120c, and 130c. The fixing portions 140 are respectively provided to fasten the lower die block 130 and the middle die block 120 to each other and fasten the middle die block 120 and the upper die block 110 to each other. A plurality of fixing portions 140 may be provided along the width direction of the slot die coater 100. A bolt may be engaged with the fixing portion 140 such that the upper die block 110, the middle die block 120, and the lower die block 130 are assembled to each other.

The upper die block 110, the middle die block 120, and the lower die block 130 are not necessarily limited to the configuration described above, and for example, they may be configured as vertical dies that discharge the electrode active material slurry upward (in the Y-axis direction) and have the back surfaces 110c, 120c, and 130c as a bottom surface.

The die blocks 110, 120, and 130 are made of, for example, a SUS material. A material that is easy to process, such as SUS420J2, SUS630, SUS440C, SUS304, or SUS316L, may be used. SUS has the advantage of being easy to process, inexpensive, highly corrosion-resistant, and being manufactured into a desired shape at low cost.

The upper die block 110 is disposed to come into contact with the first surface 120a, which is the top surface of the middle die block 120 parallel to the bottom surface. The upper slot 101 is formed in the portion where the middle die block 120 and the upper die block 110 are in contact with each other. An upper shim 300 is interposed between the middle die block 120 and the upper die block 110 to make a gap therebetween. As a result, the upper slot 101 corresponding to a passage through which the first coating liquid 150 flows is formed. That is, the upper shim 300 is provided between the upper die block 110 and the middle die block 120 to form the upper slot 101. In this case, the vertical width (in the Y-axis direction) (a slot gap) of the upper slot 101 is determined by the thickness of the upper shim 300. The thickness of the upper shim 300 may be approximately 1 mm. For example, when coating with an electrode active material slurry including solid contents of 40 to 80% to have a thickness of 70 *µ*m to 300 *µ*m, the thickness of the upper shim 300 may be 0.5 mm to 1.5 mm.

As shown in FIG. 5, the upper shim 300 includes at least one first opening 310 formed by cutting at least one area and is interposed between the middle die block 120 and the upper die block 110 only in the remaining portion, excluding one side, of the border area on the opposing surfaces thereof. Accordingly, the perimeter portions of the upper slot 101, excluding the front portion, are closed, and an upper outlet 101a is formed only between the leading edge of the upper die block 110 and the leading edge of the middle die block 120. The leading edge of the upper die block 110 and the leading edge of the middle die block 120 are defined as an upper die lip 111 and a middle die lip 121, respectively, and thus the upper outlet 101a may be formed by the separation between the upper die lip 111 and the middle die lip 121.

For reference, the upper shim 300 may serve as a gasket to prevent the first coating liquid 150 from leaking through the gap between the upper die block 110 and the middle die block 120, excluding the area where the upper outlet 101a is formed, and thus may be made of a material having sealing properties. The upper shim 300 may be made of, for example, plastic or metal, but the present disclosure is not limited thereto. The upper shim 300 may be made of, for example, a resin sheet such as Teflon or polyester, or a metal sheet such as copper or aluminum. Like the die blocks 110, 120, and 130, the upper shim 300 may be made of SUS. The upper shim 300 may be coupled and fixed to the upper die block 110 or the middle die block 120 by, for example, screws.

In addition, the middle die block 120 has a first manifold 155 formed on the first surface 120a facing the upper die block 110 to have a predetermined depth and communicate with the upper slot 101. Although not shown in the drawing, the first manifold 155 is connected to a first coating liquid supply chamber installed outside through a supply pipe to receive the first coating liquid 150. If the first coating liquid 150 is supplied from the outside through the supply pipe such that the first manifold 155 is filled with the first coating liquid, the first coating liquid 150 is guided to flow along the upper slot 101 communicating with the first manifold 155 and is discharged to the outside through the upper outlet 101a communicating with the upper slot 101. As another example, the first manifold 155 may be provided on the surface 110b of the upper die block 110 facing the middle die block 120.

The lower die block 130 is disposed at the lowest position, among the blocks constituting the slot die coater 100, and the surface 130b thereof facing the middle die block 120 is inclined an angle of about 20 degrees to 60 degrees with respect to the bottom surface 130d.

The lower slot 102 may be formed in the portion where the lower die block 130 and the middle die block 120 come into contact with each other. A lower shim 400 may be interposed between the lower die block 130 and the middle die block 120 to form a gap therebetween, thereby forming a lower slot 102 corresponding to a passage through which the second coating liquid 160 flows. That is, the lower shim 400 is provided between the middle die block 120 and the lower die block 130 to form the lower slot 102. In this case, the thickness of the lower shim 400 determines the vertical width (in the Y-axis direction) (a slot gap) of the lower slot 102. The thickness of the lower shim 400 may be approximately 1 mm. For example, when coating with an electrode active material slurry including solid contents of 40 to 80% to have a thickness of 70 *µ*m to 300 *µ*m, the thickness of the lower shim 400 may be 0.5 mm to 1.5 mm.

As shown in FIG. 5, the lower shim 400 may include at least one second opening 410 formed by cutting at least one area, and may be interposed between the lower die block 130 and the middle die block 120 only in the remaining portion, excluding one side, of the border area on the opposing surfaces thereof. Accordingly, a lower outlet 102a through which the second coating liquid 160 is discharged to the outside is formed only between the leading edge of the lower die block 130 and the leading edge of the middle die block 120. The leading edge of the lower die block 130 is defined as a lower die lip 131, and thus the lower outlet 102a may be formed by the separation between the lower die lip 131 and the middle die lip 121.

Likewise, the lower shim 400 may serve as a gasket to prevent the second coating liquid 160 from leaking through the gap between the lower die block 130 and the middle die block 120, excluding the area where the lower outlet 102a is formed, and thus may be made of a material having sealing properties. The lower shim 400 may also be made of, for example, plastic or metal, but the present disclosure is not limited thereto. The lower shim 400 may be made of, for example, a resin sheet such as Teflon or polyester, or a metal sheet such as copper or aluminum. Like the die blocks 110, 120, and 130, the lower shim 400 may also be made of SUS. The lower shim 400 may be coupled and fixed to the middle die block 120 or the lower die block 130 by, for example, screws.

The lower die block 130 has a second manifold 165 formed on the surface 130b facing the middle die block 120 to have a predetermined depth and communicate with the lower slot 102. Although not shown in the drawing, the second manifold 165 is connected to a second coating liquid supply chamber (not shown) installed outside through a supply pipe to receive the second coating liquid 160. If the second manifold 165 is filled with the second coating liquid 160, the second coating liquid 160 is guided to flow along the lower slot 102 and is discharged to the outside through the lower outlet 102a communicating with the lower slot 102. As another example, the second manifold 165 may be provided on the surface 120b of the middle die block 120 facing the lower die block 130.

The upper slot 101 and the lower slot 102 may form a certain angle therebetween, and the angle may be approximately 30 degrees to 60 degrees. The upper slot 101 and the lower slot 102 may intersect each other at one point, and the upper outlet 101a and the lower outlet 102a may be provided near the intersection point. Therefore, the discharge points of the first coating liquid 150 and the second coating liquid 160 may be concentrated at approximately one point. Through this, the lower coating layer by the second coating liquid 160 and the upper coating layer by the first coating liquid 150 may be aligned up, down, left, and right to form a double layer.

According to the slot die coater 100 having the above configuration, a coating roll 500 may be disposed to be rotatable in front of the slot die coater 100, and a base material 200 to be coated may travel in the MD direction by rotating the coating roll 500, so that the first coating liquid 150 may be discharged and applied onto the base material 200 through the upper outlet 101a, and so that the second coating liquid 160 may be discharged and applied onto the base material 200 through the lower outlet 102a.

The first coating liquid 150 and the second coating liquid 160 may be different types of coating liquids. The first coating liquid 150 and the second coating liquid 160 may have viscosities of 4000 cps to 6000 cps. The first coating liquid 150 and the second coating liquid 160 may be electrode active material slurries.

The second coating liquid 160 and the first coating liquid 150 may be continuously applied onto the surface of the base material 200 through the slot die coater 100, thereby coating the base material 200 in a double layer. Alternatively, the supply and stop of the second coating liquid 160 and the supply and stop of the first coating liquid 150 may be alternately performed to intermittently form a coating pattern on the base material 200. Preferably, the second coating liquid 160 and the first coating liquid 150 are simultaneously discharged to form a double layer coating. In order to manufacture a high-energy density secondary battery, the thickness of the electrode active material layer is gradually increasing from about 130 *µ*m to 300 *µ*m. If a thick electrode active material layer is formed using the conventional slot die coater 10 shown in FIG. 1, migration of the binder and conductive material worsens in the active material slurry during drying, resulting in an uneven final electrode. In order to solve the above problem, coating may be performed twice such that an electrode active material layer is coated thinly and dried, and then another electrode active material layer is coated thereon and dried, but it takes a long time. According to the present disclosure, if a slot die coater 100 with two slots is used, the second coating liquid 160 and the first coating liquid 150 may be simultaneously discharged to form a thick electrode active material layer at once, thereby improving both electrode performance and productivity.

In particular, the slot die coater 100 has different shapes of the upper shim 300 and lower shim 400, which may improve the profile of the edge of the electrode active material layer.

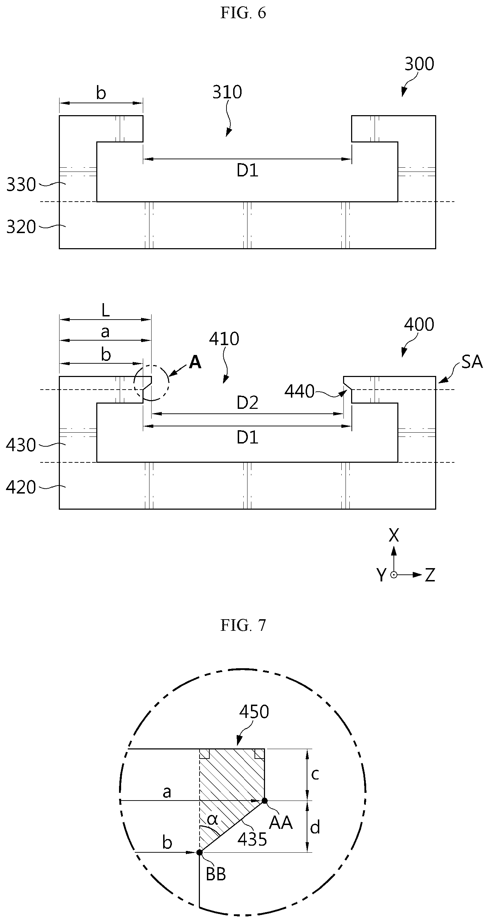

FIG. 6 is a plan view of an upper shim and a lower shim included in a slot die coater according to an embodiment of the present disclosure, and FIG. 7 is a partially enlarged view of a lower shim included in a slot die coater according to an embodiment of the present disclosure, which enlarges the area A in FIG. 6.

First, referring to FIG. 6, the upper shim 300 includes at least one first opening 310, and the lower shim 400 includes a second opening 410 at a position corresponding to the first opening 310. The second opening 410 includes a section SA with a smaller width than the first opening 310 at a front end adjacent to the lower outlet 102a. For example, the width of the first opening 310 is D1, and the second opening 410 includes a section SA whose width D2 is smaller than D1. The section SA whose width D2 is smaller than D1 may be part of the second opening 410, and the width of the remaining section of the second opening 410 may be D1, which is the same as the width of the first opening 310.

The upper shim 300 and the lower shim 400 determine the coating width of a coating layer applied onto the base material 200, and the numbers of first openings 310 and second openings 410 may determine the number of lanes, i.e., the number of patterns, and the sizes of the first opening 310 and second opening 410 may affect the coating width. Although the illustrated example shows one first opening 310 and one second opening 410, a plurality of first openings 310 and second openings 410 may be included to form a coating layer in a stripe pattern on the base material 200.

More specifically, the upper shim 300 includes a first portion 320 that serves as a base and at least two second portions 330 that extend from the first portion 320, and the second portions 330 are connected to the same side of the first portion 320 and extend in the same direction (X-axis direction), and the space between the second portions 330 is defined as the first opening 310. In particular, in the present embodiment, the width of the first opening 310 is constant as D1. The first coating liquid 150 may be discharged through the first opening 310.

The first portion 320 and the second portion 330 may be formed as one piece. That is, there is no gap or separation between the first portion 320 and the second portion 330. Therefore, it is possible to prevent the first coating liquid 150 from unnecessarily flowing between the first portion 320 and the second portion 330.

The first portion 320 of the upper shim 300 is disposed in the rear portion of the upper die block 110. In order for the upper shim 300 to be interposed between the remaining portions, excluding one side, of the edge areas on the opposing surfaces of the upper die block 110 and the middle die block 120, at least two second portions 330 are required.

The second portion 330 extends toward the upper outlet 101a, that is, in the X-axis direction. That is, the second portion 330 extends from the upper shim 300 toward the front portion of the upper die block 110. If the number of the second portions 330 increases, more lanes may be produced for discharging the first coating liquid 150 on the base material 200, thereby forming more patterns side by side at once. That is, stripe pattern coating may be performed. However, the present disclosure is not limited to a specific number of second portions 330. The second portion 330 corresponds to the shim finger 61 of the conventional shim 60 in FIG. 3.

The lower shim 400 includes a third portion 420 that serves as a base and at least two fourth portions 430 that extend from the third portion 420, and the fourth portions 430 are connected to the same side of the third portion 420 and extend in the same direction (X-axis direction), and the space between the fourth portions 430 is defined as the second opening 410. In addition, a flow increasing portion 440, in which the flow rate of the second coating liquid 160 increases because the width D1 of the second opening 410 is greater than the front width D2, is formed at the rear end of the second opening 410 on the inner side of the lower shim 400, which is different in shape from the upper shim 300. The second coating liquid 160 may be discharged through the second opening 410, and the loading in the side portions may be increased because of the flow increasing portion 440.

The third portion 420 and the fourth portion 430 may be formed as one piece. That is, there is no gap or separation between the third portion 420 and the fourth portion 430. Therefore, it is possible to prevent the second coating liquid 160 from unnecessarily flowing between the third portion 420 and the fourth portion 430.

The third portion 420 of the lower shim 400 is disposed in the rear portion of the lower die block 130. In order for the lower shim 400 to be interposed between the remaining portions, excluding one side, of the edge areas on the opposing surfaces of the lower die block 130 and the middle die block 120, at least two fourth portions 430 are required.

The fourth portion 430 extends toward the lower outlet 102a, that is, in the X-axis direction. That is, the fourth portion 430 extends toward the front portion of the lower die block 130 from the lower shim 400. If the number of fourth portions 430 increases, more lanes may be produced to discharge the second coating liquid 160 on the base material 200, and more patterns may be formed side by side at once. That is, stripe pattern coating may be performed. However, the present disclosure is not limited to a specific number of fourth portions 430. The fourth portion 430 corresponds to the shim finger 61 of the conventional shim 60 in FIG. 3.

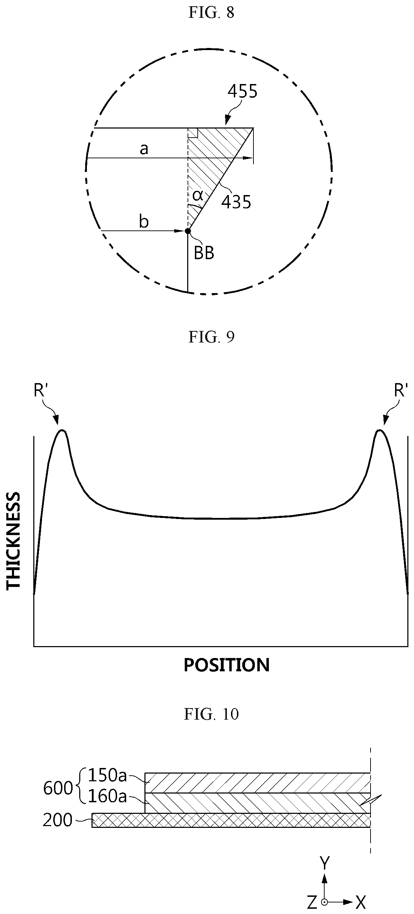

The width L of the fourth portion 430 may be differentially configured toward the rear end to form the flow increasing portion 440 in the lower shim 400. For example, a tapered shape may be applied to the side surface of the fourth portion 430 to form the flow increasing portion 440. In this case, the tapered shape may be various and may be a curve, a straight line, a step shape, a combination thereof, or the like, and, for example, may be as shown in FIGS. 7 and 8.

First, referring to FIG. 7, the width of the fourth portion 430 may be constant as a first width (a) from the front end of the second opening 410 toward the rear end to the first position AA, and may decrease to a second width (b) along the inclined surface 435 toward the rear end to the second position BB, and may be constant as the second width (b) thereafter. The length from the front end of the lower shim 400 to the first position AA is "c", and the length from the first position AA to the second position BB is represented as "d".

In the example illustrated in FIG. 7, the inclined surface 435 is formed to protrude by a width (a-b) in the width direction and extend by a length (d) toward the lower outlet 102a. If (a-b) and (d) are the same, the angle α of the inclined surface 435 becomes 45 degrees. The angle α of the inclined surface 435 is adjustable to improve loading unevenness, and (a-b), (c), or (d) may also be adjusted to improve sliding. In addition, (a-b), (c), or (d) may be determined between the sliding improvement effect and the concern about the occurrence of a fat edge.

The angle α of the inclined surface 435 may be 25 degrees to 70 degrees with respect to the side surface of the fourth portion 430 or the discharge direction (opposite the X-axis direction). If the angle α of the inclined surface 435 is smaller than 25 degrees, the length of the flow increasing portion 440 may be shortened, thereby reducing the sliding improvement effect. If the angle α of the inclined surface 435 is larger than 70 degrees, a rapid change in the flow rate may occur on the surface leading to the inclined surface 435, thereby affecting the discharge pressure, which is not desirable.

In addition, in response to the lower shim 400, the width of the second portion 330 in the upper shim 300 may be constant as the second width (b).

The structure in FIG. 7 shows that a protrusion 450 is further formed on the side surface of the fourth portion 430 at the front end of the second opening 410. In addition, the protrusion 450 may be configured in a right trapezoidal shape.

Next, as shown in FIG. 8, the width of the fourth portion 430 may also be linearly reduced from the front end of the second opening 410 toward the rear end. The fourth portion 430 may have a first width (a) at the front end of the second opening 410, which may decrease to a second width (b) toward the rear end to the second position BB along the inclined surface 435, and may then be constant as the second width (b) thereafter. The structure in FIG. 8 also shows that a protrusion 455 is further formed on the side surface of the fourth portion 430 at the front end of the second opening 410. In addition, the protrusion 455 may be configured in a right triangle shape.

The sliding improvement effect may be controlled by adjusting the shape and size of the protrusion 450 or 455. As the size of protrusion 450 or 455 increases, the influence on the electrode active material layer profile will increase. In order to realize a given coating width, the size of protrusion 450 or 455 cannot be simply increased, and the size of protrusion 450 or 455 may be adjusted by further considering the properties of the coating liquid.

FIG. 9 illustrates a cross-section of a secondary battery electrode plate in a TD direction in the case where an electrode active material slurry is coated using the lower shim 400 in FIG. 7.

Referring to FIG. 9, an increase in the flow rate in the side portion may result in an increase in the thickness of the edge of the electrode active material layer, which is thicker than the center, such as a side ring R'.

When coating an electrode active material slurry using the upper shim 300 as shown in FIG. 6, the cross-section of the secondary battery electrode plate in the TD direction may be similar to FIG. 3.

The present disclosure also provides a method for manufacturing an electrode plate for a secondary battery, which includes a step of forming a lower coating layer 160a with a second coating liquid 160 on the base material 200 and simultaneously forming an upper coating layer 150a on the lower coating layer 160a with a first coating liquid 150 on the base material 200 using the slot die coater 100.

The first coating liquid 150 and the second coating liquid 160 may be electrode active material slurries having different types of active materials or binder contents. For example, the second coating liquid 160 may include a natural graphite active material and the first coating liquid 150 may include an artificial graphite active material.

In this case, by adjusting the gap between the upper slot 101a of the slot die coater 100 and the base material 200 and the gap between the lower slot 102a of the slot die coater 100 and the base material 200, the width (spreading width) of the first coating liquid 150 spreading more than the width D1 of the first opening 310 and the width of the second coating liquid 160 spreading more than the width D2 of the second opening 410 may be adjusted. If the gap is narrow, the spreading width increases, and if the gap is large, the spreading width decreases.

FIG. 10 illustrates a cross-section of a secondary battery electrode plate in a TD direction, which is manufactured according to the present disclosure. Referring to FIG. 10, an electrode active material layer 600 is formed on the base material 200, and the electrode active material layer 600 includes a lower coating layer 160a and an upper coating layer 150a.

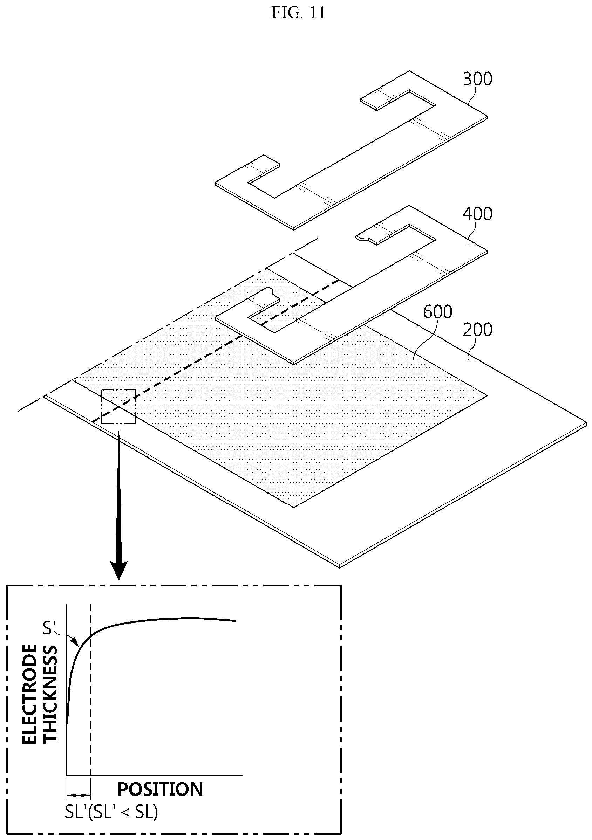

Since the slot die coater 100 of the present disclosure coats the electrode active material layer 600 using both the upper shim 300 and the lower shim 400, the cross-section of the electrode active material layer 600 in the TD direction formed on the base material 200 may be improved as shown in FIG. 11.

FIG. 11 illustrates a cross-section of a secondary battery electrode plate in a TD direction, which is coated with an electrode active material slurry using a slot die coater according to the present disclosure.

Referring to FIG. 11, if an electrode active material layer 600 is coated on the base material 200 using both the upper shim 300 and the lower shim 400 through a slot die coater 100 according to the present disclosure, the cross-section of the electrode active material layer 600 in the TD direction may be identified. As a result of combining the TD-directional cross-section profile by the upper shim 300 (e.g., the profile in which sliding occurs as shown in FIG. 3) and the TD-directional cross-section profile by the lower shim 400 (e.g., the profile in which side rings occur as shown in FIG. 9), it can be seen that the sliding significantly improves in the thickness profile of the electrode active material layer 600 shown in FIG. 11, compared to the conventional profile shown in FIG. 3.

According to the present disclosure, the electrode active material layer 600 is coated using both the upper shim 300 and the lower shim 400 through the slot die coater 100 so that the lower coating layer 160a is formed on the base material 200 with the second coating liquid 160 by increasing the flow rate in the side portion, and so that the upper coating layer 150a is formed on the lower coating layer 160a with the first coating liquid 150 on the base material 200, thereby pressing the portion where the flow rate is increased in the side portion. Therefore, the thickness profile of the electrode active material layer 600 may be improved compared to the prior art.

In particular, using the lower shim 400 on which the flow increasing portion 440 is formed, the sliding length SL' of the electrode active material layer 600 applied on the base material 200 becomes shorter than the conventional sliding length SL (SL' < SL). Furthermore, as shown in FIG. 3, the thickness at the point where the thickness change begins to be gentle in the sliding portion S' of the electrode active material layer 600 applied on the base material 200 increases compared to the thickness at the point where the thickness change begins to be gentle in the sliding portion S of the conventional electrode active material layer. Therefore, the profile of the sliding portion S' is improved.

According to the present disclosure, the profile of the edge of the electrode active material layer 600 may be mutually complemented using the upper shim 300 and the lower shim 400 of different shapes. The second opening 410 of the lower shim 400 includes a section SA with a smaller width than the first opening 310 of the upper shim 300 at the front end adjacent to the lower outlet 102a. The lower shim 400 includes the flow increasing portion 440 on the inner side of the second opening 410. Since the lower shim 400 may increase the flow rate of the second coating liquid 160 in the side portion, if the lower shim 400 is used alone, a profile in which a side ring R' is formed at the edge may be obtained. The upper shim 300 may form the upper coating layer 150a capable of pressing and covering the lower coating layer 160a formed by the lower shim 400 from above. If only the upper shim 300 is used, a profile that causes sliding at the edge may be obtained. However, a mutually complementary combination of the sliding by the upper shim 300 and the side ring R' by the lower shim 400 enables to form a sliding portion S' with a reduced sliding length SL', compared to the conventional one, at the edge in the electrode active material layer 600 formed up to the upper coating layer 150a on the lower coating layer 160a. In addition, a side ring does not occur in the electrode active material layer 600.

Meanwhile, FIG. 3 shows an electrode profile by the slot die coater 10 using the conventional shim 60, and if two identical conventional shims 60 are applied to the upper shim and the lower shim while configuring a dual slot die coater like the present disclosure, the electrode profile becomes worse. Therefore, in the case of a dual slot die coater according to the present disclosure, the effect of combining the upper shim 300 and the lower shim 400 with different shapes is remarkable.

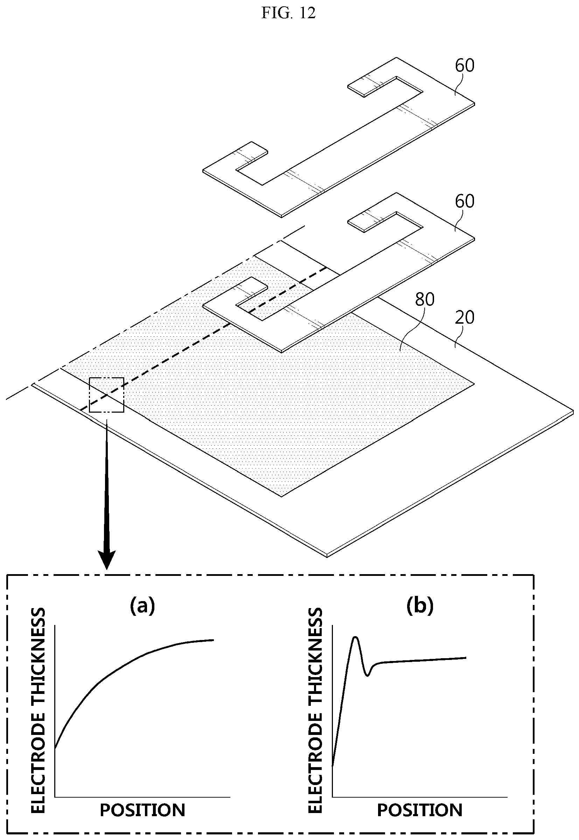

FIG. 12 illustrates a cross-section of a secondary battery electrode plate in a TD direction, which is coated with an electrode active material slurry using a slot die coater according to a comparative example.

FIG. 12 shows an electrode profile in the case where, for example, two identical conventional shims 60 are applied to the upper shim and the lower shim to form an electrode active material layer 80 on the collector 20. As described in FIG. 3, according to the conventional shim 60, a sliding portion S or a side ring R is produced, and if an upper shim and a lower shim of the same shape are used, the same shape is added, so the electrode profile will result in very severe sliding as shown in FIG. 12(a) or side rings occurring as shown in FIG. 12(b). In particular, if a shim for the purpose of increasing the flow rate of the side portion is applied to both the upper shim and the lower shim, side rings will be worse as shown in FIG. 12(b).

As described above, it may be fully understood that the electrode profile may be significantly improved as shown in FIG. 11, compared to the electrode profile in FIG. 12, due to the features of applying shims of different shapes to the dual slot die coater of the present disclosure.

An electrode active material layer may be stably formed using the slot die coater 100 including the upper shim 300 and the lower shim 400 described above. According to the present disclosure, since the coating width, the amount of loading, and sliding control are possible, the quality of the coating layer and electrode active material layer formed according to the present disclosure is very excellent. For example, the thickness of the coating layer in the width direction of the base material 200 may be uniform, regardless of the position, and the sliding section may be formed in a desired shape. Therefore, according to the present disclosure, the coating layer, especially the electrode active material layer, may be stably formed without causing pattern defects.

For example, coating the positive electrode active material slurry using the slot die coater 100 may be applied to the manufacture of a positive electrode plate of a secondary battery.

The positive electrode plate includes a collector and a positive electrode active material layer formed on the surface of the collector. According to the present disclosure, the positive electrode active material layer may be formed on one surface of the collector, or on the top and back surfaces by sequential coating.

The collector exhibits electrical conductivity, such as Al, Cu, and the like, and an appropriate one may be used depending on the polarity of the collector electrode known in the secondary battery field. The positive electrode active material slurry may further include one or more of a plurality of positive electrode active material particles, a conductive material, and a binder. In addition, the positive electrode active material slurry may further include various additives for the purpose of supplementing or improving electrochemical characteristics.

The active material is not limited to a specific composition as long as it is able to be used as a positive electrode active material of a lithium ion secondary battery. Non-limited examples thereof may include: layered compounds such as lithium manganese oxides (LiMn₂O₄, LiMnO₂, or the like), lithium cobalt oxides (LiCoO₂), or lithium nickel oxides (LiNiO₂), or compounds substituted with one or more transition metals; lithium manganese oxides having the chemical formula Li₁₊ₓMn₂₋ₓO₄ (wherein, x is 0 to 0.33), LiMnO₃, LiMn₂O₃, LiMnO₂, or the like; lithium copper oxides (Li₂CuO₂); vanadium oxides such as LiV₃O₈, LiV₃O₄, V₂O₅, Cu₂V₂O₇, or the like; Ni-site type lithium nickel oxides represented by the chemical formula LiNi₁₋ₓMₓO₂ (wherein, M = Co, Mn, Al, Cu, Fe, Mg, B, or Ga, and x = 0.01 to 0.3); lithium manganese composite oxides represented by the chemical formula LiMn₂₋ₓMₓO₂ (wherein, M = Co, Ni, Fe, Cr, Zn, or Ta, and x = 0.01 to 0.1) or Li₂Mn₃MO₈ (wherein, M = Fe, Co, Ni, Cu, or Zn); LiMn₂O₄ in which a part of Li in the chemical formula is replaced with an alkaline earth metal ion; disulfide compounds; Fe₂(MoO₄)₃; and a mixture thereof. In the present disclosure, the positive electrode may include, as a solid electrolyte material, at least one of a polymer-based solid electrolyte, an oxide-based solid electrolyte, and a sulfide-based solid electrolyte.

In general, the conductive material may be added in an amount of 1 wt% to 20 wt% based on the total weight of the mixture including the active material. The conductive material is not specifically limited as long as it does not cause chemical change in the battery and has conductivity, and may include: for example, graphite such as natural graphite or artificial graphite; carbon black such as carbon black, acetylene black, Ketjen black, channel black, furnace black, lamp black, or thermal black; conductive fibers such as carbon fibers or metal fibers; metal powders such as carbon fluoride, aluminum, or nickel powders; conductive whiskers such as zinc oxide or potassium titanate; conductive metal oxides such as titanium oxide; conductive materials such as polyphenylene derivatives; or a mixture thereof.

The binder is not specifically limited as long as it is able to assist in the binding of the active material and the conductive material and the binding to the collector, and may be, for example, polyvinylidene fluoride polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer (EPDM), sulfonated EPDM, styrene butadiene rubber, fluorine rubber, and various copolymers. The binder may be included in the range of 1 wt% to 30 wt%, or 1 wt% to 10 wt% with respect to the electrode layer of 100 wt%.

A negative electrode plate of a secondary battery may also be manufactured by coating a negative electrode active material slurry using the slot die coater 100 of the present disclosure. The negative electrode plate includes a collector and a negative electrode active material layer formed on one surface or the top and back surfaces of the collector. The negative electrode active material slurry may further include one or more of a plurality of negative electrode active material particles, a conductive material, and a binder. In addition, the negative electrode active material slurry may further include various additives for the purpose of supplementing or improving electrochemical characteristics.

The negative electrode active material may be carbon materials such as graphite, amorphous carbon, diamond-like carbon, fullerene, carbon nanotubes, or carbon nanohorn, lithium metal materials, alloy materials such as silicon or tin, oxide materials such as Nb₂O₅, Li₅Ti₄O₁₂, or TiO₂, or a composite thereof. The description of the conductive material, binder, and collector for the positive electrode may also be applied to those of the negative electrode.

In particular, as mentioned above, a negative electrode plate with desired characteristics may be manufactured or the characteristics of the negative electrode plate may be controlled by making the types of active materials or binder contents of the first coating liquid 150 and the second coating liquid 160 different from each other. If the binder contents are different between the first coating liquid 150 and the second coating liquid 160 while maintaining the solid contents the same, the active material contents may also be different between the first coating liquid 150 and the second coating liquid 160. For example, by making the binder content of the second coating liquid 160 higher and the binder content of the first coating liquid 150 lower, the lower coating layer 160a may be well attached to the base material 200 and the upper coating layer 150a may be formed thereon. The upper coating layer 150a may contain a higher content of active material than the lower coating layer 160a, thereby further increasing the capacity of the secondary battery. In addition, the second coating liquid 160 may contain a natural graphite active material, and the first coating liquid 150 may contain an artificial graphite active material, thereby controlling the characteristics of the negative electrode plate and appropriately utilizing the unique characteristics of respective active materials.

Sliding may be improved using the slot die coater 100 of the present disclosure, so that the discharge capacity of the positive electrode does not exceed the discharge capacity of the negative electrode, thereby preventing lithium plating and securing cell safety. In addition, the electrode plate manufactured using the method for manufacturing a secondary battery electrode plate according to the present disclosure may be produced as an electrode assembly and included in a cylindrical secondary battery. In particular, such a cylindrical secondary battery may be manufactured as a large cylindrical secondary battery having a form factor of 4680 or more. The size of the electrode plate may vary depending on the size of the jellyroll-type electrode assembly to be manufactured, that is, the size of a cylindrical secondary battery to be manufactured. The size of the electrode plate included in a large cylindrical secondary battery having a form factor of 4680 must be larger than the size of the electrode plate included in a small cylindrical secondary battery having a form factor of 1865 or 2170. The slot die coater 100 of the present disclosure is suitable for manufacturing such large electrode plates.

Here, the form factor is a value indicating the diameter and height of the cylindrical secondary battery. The cylindrical secondary battery capable of being manufactured by the slot die coater 100 according to the present disclosure may be, for example, a 4611 cell, a 4875 cell, a 4811 cell, a 4880 cell, or a 4680 cell. In the numerical value indicating the form factor, the first two digits indicate the diameter of the cell, and the next two digits indicate the height of the cell. The last number "0" is added to indicate that the cross-section of the cell is circular.

Preferably, the form factor of the producible secondary battery is 4680, and the electrode plate obtained as described above may be included in the jellyroll-type electrode assembly included in the cylindrical secondary battery, and the width of one electrode plate may be 60 to 110 mm, and the length may be 3 to 5 m. The upper shim 300 and the lower shim 400 may have dimensions capable of manufacturing an electrode plate having the above size. In addition, the numbers of second portions 330 and fourth portions 430 corresponding to the shim fingers may be increased so that the electrode active material layer patterns are simultaneously formed in stripes side by side along multiple lanes on one base material 200, and then slitting is performed along the uncoated area between two adjacent electrode active material layer patterns, thereby utilizing each as an electrode plate.

Hereinafter, the results of comparing electrode plates manufactured according to an embodiment of the present disclosure and comparative examples will be described.

The electrode profiles were measured and the sliding lengths were compared for sample #1 in which the lower shim 400 shown in FIG. 6 was applied to both the upper shim and the lower shim, sample #2 (the same case as FIG. 12) in which the upper shim 300 shown in FIG. 6 was applied to both the upper shim and the lower shim, sample #3 (corresponding to the embodiment of the present disclosure) in which the upper shim 300 in FIG. 6 was applied to the upper shim and the lower shim 400 in FIG. 6 was applied to the lower shim, and sample #4 in which the lower shim 400 in FIG. 6 was applied to the upper shim and the upper shim 300 in FIG. 6 was applied to the lower shim (the positions of the upper shim/lower shim are reverse to those in the embodiment of the present disclosure).

The coating width was designed to be 230 mm, the loading was 367 mg/25 cm², the upper spreading width was 3 mm, and the lower spreading width was 3 mm. The lower shim 400 has a protrusion 450. In this case, (a-b) is 4 mm, (c) is 2 mm, and the angle α is 45 degrees. The first coating liquid 150 and the second coating liquid 160 are electrode active material slurries including 53% solid contents. The thicknesses of the lower shim 400 and the upper shim 300 are 0.6 mm, respectively. The lengths from the front ends to the rear ends of the upper shim 300 and the lower shim 400 are 169.9 mm, respectively, and the lengths from the left ends to the right ends of the upper shim 300 and the lower shim 400 are 449 mm, respectively.

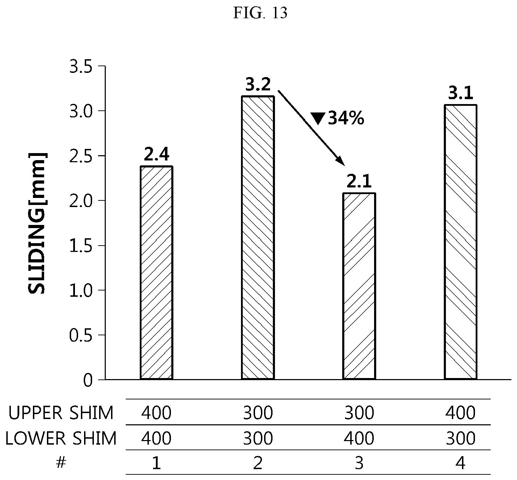

FIG. 13 illustrates the results of comparing sliding lengths between samples #1 to #4.

The sliding length of sample #1 is 2.4 mm, which shows an improved result compared to the sliding length of 3.2 mm in sample #2, but is longer than the sliding length of 2.1 mm in sample #3 according to the embodiment of the present disclosure. The sliding length of sample #4, in which the positions of the upper shim/lower shim are reverse to those in the embodiment of the present disclosure, is as long as sample #2. The sliding length of sample #3 was reduced by 34% compared to sample #2. Sample #3 shows the most advantageous result in sliding length.

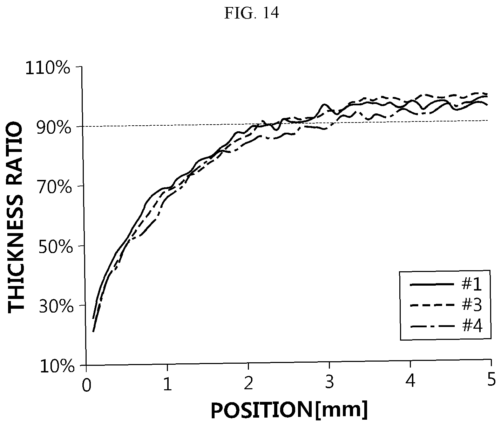

FIG. 14 illustrates the results of comparing electrode profiles between samples #1 to #4. Compared to sample #1 and sample #4, sample #3 shows an advantage in the shape of the sliding portion. In particular, sample #3 is significant in that no side ring occurs even though the spreading width is 3 mm.

As described above, although the present disclosure has been described through limited embodiments and drawings, the present disclosure is not limited thereto, and it is obvious that various modifications and variations are possible in the scope of the technical idea of the present disclosure and the equivalent scope of the claims to be described below by those skilled in the art to which the present disclosure belongs.

### [Description of Reference numerals]

| | | | |
|---|---|---|---|
| 100: | Slot die coater | 101: | Upper slot |
| 102: | Lower slot | 110: | Upper die block |
| 120: | Middle die block | 130: | Lower die block |
| 200: | Base material | 300: | Upper shim |
| 310: | First opening | 320: | First portion |
| 330: | Second portion | 400: | Lower shim |
| 410: | Second opening | 420: | Third portion |
| 430: | Fourth portion | 435: | Inclined surface |
| 440: | Flow increasing portion | 450, 455: | Protrusion |
| 600: | Electrode active material layer | | |

## Claims

1. A slot die coater comprising:
an upper die block, a middle die block, and a lower die block;
an upper shim provided between the upper die block and the middle die block to form an upper slot; and
a lower shim provided between the middle die block and the lower die block to form a lower slot,
wherein a first coating liquid is discharged through an upper outlet communicating with the upper slot and applied onto a base material, and a second coating liquid is discharged through a lower outlet communicating with the lower slot and applied onto the base material,
wherein the upper shim comprises at least one first opening,
wherein the lower shim comprises a second opening at a position corresponding to the first opening, and
wherein the second opening comprises a section having a smaller width than the first opening at a front end adjacent to the lower outlet.

2. The slot die coater according to claim 1, wherein the upper shim comprises a first portion configured to serve as a base and at least two second portions extending from the first portion, wherein the second portions are connected to the same side of the first portion and extend in the same direction, wherein a space between the second portions is defined as the first opening, and wherein a width of the first opening is constant.

3. The slot die coater according to claim 2, wherein the lower shim comprises a third portion configured to serve as a base and at least two fourth portions extending from the third portion, wherein the fourth portions are connected to the same side of the third portion and extend in the same direction, wherein a space between the fourth portions is defined as the second opening, wherein a flow increasing portion having a width greater than a width of the front end of the second opening to increase a flow rate of the second coating liquid is formed at a rear end of the second opening on an inner side of the lower shim.

4. The slot die coater according to claim 3, wherein a width of the fourth portion is differentially configured in a direction toward the rear end to form the flow increasing portion.

5. The slot die coater according to claim 3, wherein a tapered shape is applied to a side surface of the fourth portion to form the flow increasing portion.

6. The slot die coater according to claim 3, wherein a width of the fourth portion is constant as a first width from the front end of the second opening to a first position toward the rear end, decreases to a second width toward the rear end by an inclined surface to a second position, and is constant as the second width to a third portion.

7. The slot die coater according to claim 6, wherein an angle of the inclined surface is 25 degrees to 70 degrees.

8. The slot die coater according to claim 7, wherein a width of the second portion is constant as the second width.

9. The slot die coater according to claim 3, wherein a width of the fourth portion decreases linearly from the front end of the second opening toward the rear end.

10. The slot die coater according to claim 1, wherein the lower shim comprises a third portion configured to serve as a base and at least two fourth portions extending from the third portion, wherein the fourth portions are connected to the same side of the third portion and extend in the same direction, wherein a space between the fourth portions is defined as the second opening, and wherein a protrusion is further formed on a side surface of the fourth portion at the front end of the second opening.

11. The slot die coater according to claim 10, wherein the protrusion has a right triangle or right trapezoidal shape.

12. The slot die coater according to claim 1, wherein the first coating liquid and the second coating liquid are different types of coating liquids.

13. The slot die coater according to claim 1, wherein the first coating liquid and the second coating liquid have viscosities of 4000 cps to 6000 cps.

14. A method for manufacturing an electrode plate for a secondary battery, the method comprising:
forming a lower coating layer on a base material with a second coating liquid by increasing a flow rate in a side portion; and
simultaneously forming an upper coating layer on the lower coating layer with a first coating liquid on the base material to press a portion where the flow rate is increased in the side portion.

15. The method for manufacturing an electrode plate for a secondary battery according to claim 14, wherein the first coating liquid and the second coating liquid are electrode active material slurries having different types of active materials or binder contents.

16. A method for manufacturing an electrode plate for a secondary battery, the method comprising forming a lower coating layer on a base material with a second coating liquid and simultaneously forming an upper coating layer on the lower coating layer with a first coating liquid on the base material using a slot die coater according to any one of claims 1 to 13.

17. The method for manufacturing an electrode plate for a secondary battery according to claim 16, wherein the second coating liquid comprises a natural graphite active material and the first coating liquid comprises an artificial graphite active material.

18. The method for manufacturing an electrode plate for a secondary battery according to claim 16, wherein a gap between an upper slot of the slot die coater and the base material and a gap between a lower slot of the slot die coater and the base material are adjusted to control a width at which the first coating liquid spreads more than a width of the first opening and a width at which the second coating liquid spreads more than a width of the second opening.
